# EUROPÄISCHE PATENTSCHRIFT

(11) **EP 1 926 651 B1**
(45) Veröffentlichungstag und Bekanntmachung des Hinweises auf die Patenterteilung: **02.09.2015**
(21) Anmeldenummer: 06776503.2
(22) Anmeldetag: 29.07.2006
(51) Int. Cl.: B62B 3/00

(54) **REINIGUNGSWAGEN**
CLEANING TROLLEY
CHARIOT DE NETTOYAGE

(30) Priorität: 20.09.2005 DE 102005044984
(43) Veröffentlichungstag der Anmeldung: 04.06.2008
(73) Patentinhaber: Carl Freudenberg KG, 69469 Weinheim (DE)
(72) Erfinder: LINDNER, Falk, 69502 Hemsbach (DE); EISENHUT, Andreas, 69124 Heidelberg (DE); DEERBERG, Jens, 45130 Essen (DE); GRATZKI, Torsten, 45219 Essen (DE); SCHAULE, Dietmar, 86877 Walkertshofen (DE)
(86) Internationale Anmeldenummer: PCT/EP2006/007538
(87) Internationale Veröffentlichungsnummer: WO 2007/033724

(56) Entgegenhaltungen:
- DE-A1- 10 062 425
- DE-U1- 9 301 763
- FR-A1- 2 470 719
- US-A- 3 874 531
- US-A- 4 394 049
- US-A- 5 531 464
- US-A- 5 967 544
- US-A- 6 032 965
- US-A1- 2002 064 420

## Beschreibung

### Technisches Gebiet

Die Erfindung betrifft einen Reinigungswagen gemäß dem Oberbegriff von Anspruch 1.

### Stand der Technik

Derartige Reinigungswagen sind aus der WO 95/00062 AI bekannt. Ein Reinigungswagen wird zum Transportieren von Reinigungsgeräten und Reinigungsflüssigkeiten eingesetzt. Der Reinigungswagen besteht aus einem Rahmen an dem Lenkrollen und Aufnahmen für Reinigungsgeräte angeordnet sind. Der vorbekannte Reinigungswagen weist einen Rahmen auf, der aus lösbaren Einzelteilen zusammengefügt ist. Die Einzelteile können kombiniert und erweitert werden, so dass der Rahmen vergrößert und verkleinert werden kann. Durch diesen modularen Aufbau kann der Reinigungswagen an verschiedene Anforderungen angepasst werden.

Aus der DE 76 27 791 U und der FR 2 292 617 ist ein Reinigungswagen mit U-förmigen Elementen bekannt, die über Streben miteinander verbunden sind, die jeweils an den freien Enden der Elemente befestigt sind.

Aus der GB 1 322 403 A und der DE 93 01 763 U ist ein Reinigungswagen bekannt, der U-förmige Elemente aufweist. An den freien Enden der Elemente sind Rollen angeordnet und benachbart zu den freien Enden sind Verbindungsmittel an den Elementen befestigt.

Aus der US 4 394 040 ist eine Vorrichtung zum Niederknien gezeigt. Die Vorrichtung umfasst zwei U-förmige Elemente, deren Enden jeweils rechtwinklig abgebogen sind. Zwischen den Elementen ist ein Kissen angeordnet, welches die beiden Elemente miteinander verbindet. Dazu sind die Enden der Elemente mit dem Kissen verschraubt, so dass das Kissen beide Elemente miteinander verbindet.

Aus der US 3 874 531, die alle Merkmale des Oberbegriff des Anspruchs 1 offenbart, sind verschiedene Ausbildungen von Schiebewägen bekannt, welche aus mehreren Elementen zusammengesetzt sein können. Die Elemente werden untereinander verbunden, indem die Enden der Elemente teleskopartig ineinanderschiebbar ausgebildet sind.

Aus der DE 102 43 513 A1 ist ein stapelbarer Einkaufswagen bekannt dessen Fahrgestell aus einem Profil mit unrundem Querschnitt besteht.

### Darstellung der Erfindung

Der Erfindung liegt die Aufgabe zugrunde, einen Reinigungswagen bereitzustellen, der bei Einsatz möglichst weniger unterschiedlicher Teile einfach erweiterbar oder umbaubar ist.

Diese Aufgabe wird durch die Merkmale des Anspruch 1 gelöst. Auf vorteilhafte Ausgestaltungen nehmen die Unteransprüche Bezug.

Zur Lösung der Aufgabe weisen die Elemente ein unrundes Profil auf, wobei die Elemente durch ein Verbindungselement miteinander verbunden sind und wobei das Verbindungselement als Steckteil zum Bilden einer formschlüssigen Verbindung ausgebildet ist. Dadurch kann mit nur zwei Elementen ein Grundmodell eines Reinigungswagens bereitgestellt werden. Die Elemente sind leicht lösbar können durch weitere, auch anders geformte Elemente erweitert werden, wodurch sich ein Baukastensystem ergibt. In einer ersten vorteilhaften Ausgestaltung bilden zwei erste Elemente an deren Enden verbunden den Rahmen. An dem Rahmen können verschiedene Einrichtungen befestigt werden. Durch die Geometrie ist der Rahmen stabil und verschiedene Einrichtungen können einfach an dem Rahmen befestigt werden. Die Höhe des Reinigungswagens ist abhängig von der Höhe der Schenkel und wird auf eine ergonomische Arbeitshöhe abgestimmt. Es können auch weitere Elemente in die oberen Querstreben der ersten Elemente eingehängt werden. In die Seiten des Rahmens können Blenden eingehängt werden, um einen geschlossenen Reinigungswagen zu bilden. Bei derartigen Reinigungswagen ist der Zugriff auf Reinigungsgeräte und insbesondere die Reinigungsflüssigkeiten durch Dritte erschwert.

Erfindungsgemäß weisen die Elemente ein unrundes Profil auf. Dabei kann das Profil rechteckig oder besonders bevorzugt flachoval ausgebildet sein. Dieses Profil weist eine hohe Biegesteifigkeit auf. Des Weiteren weist das Profil einen guten Griff auf, so dass sich die Ergonomie des Reinigungswagens erhöht. Der Reinigungswagen kann dabei an dem Rahmen gegriffen und manövriert werden. Das flachovale Profil erlaubt ein einfaches und verdrehsicheres Befestigen von Anbauteilen, beispielsweise von Stielehaltern. In einer Ausgestaltung können die Anbauteile direkt mittels auf der Flachseite des Profils

angeordneter Aufnahmebohrungen mit dem Profil verschraubt werden. Auf der Flachseite Lassen sich Bohrungen besonders einfach anordnen. In einer anderen Ausführung sind die Anbauteile mittels eines separaten das Profil umschließenden befestigten Zwischenstücks befestigt. Durch das unrunde Profil ist das Zwischenstück verdrehsicher an dem Profil befestigt. Ferner sind die Elemente erfindungsgemäß durch ein Verbindungselement miteinander verbunden. Verbindungselemente stellen eine einfache Art der Verbindung dar. An den zu verbindenden Enden der Elemente sind keine aufwendigen Geometrien erforderlich, da die Verbindung indirekt über die Verbindungselemente erfolgt. Das Verbindungselement ist als Steckteil ausgebildet, welches beispielsweise mittels einer Schnappverbindung ohne zusätzliche Befestigungsmittel eine sichere formschlüssige Verbindung ermöglicht. Der Rahmen kann einfach und ohne Werkzeug erweitert werden. Durch zusätzliche Befestigungsmittel wie Splinte oder Schrauben erhöht sich die Festigkeit der Verbindung.

Die Enden des ersten Elementes können durch eine Verstärkungsstrebe miteinander verbunden sein. Dadurch verbessert sich die Stabilität des Rahmens und es ergeben sich zusätzliche Befestigungspunkte an denen beispielsweise Blenden, Ausleger und weitere Elemente befestigt werden können. Die Verstärkungsstrebe ist vorzugsweise durch eine Schweißverbindung mit den Schenkeln verbunden. Im Bereich der Basis des ersten Elementes kann eine weitere Verstärkungsstrebe vorgesehen sein, durch die zwei Elemente miteinander verbunden sind. Durch diese Strebe erhöht sich zusätzlich die Stabilität des Reinigungswagens. Des Weiteren kann die weitere Verstärkungsstrebe eine Aufhängung für Wannen, Eimer oder ähnliches bilden.

Ein zweites Element kann H-förmig ausgebildet und ein drittes Element kann U-förmig ausgebildet sein, wobei die Enden des dritten Elementes mit dem zweiten Element an dessen Knotenstellen verbunden ist und die Enden des zweiten Elementes können mit den Enden des ersten Elementes verbindbar sein. Dabei ist das H-förmige Element mit dem aufgesetzten U-förmigen Element zwischen den beiden ersten Elementen angeordnet. Hierdurch ergibt sich im Vergleich zu dem Grundmodell ein zusätzliches Fach. Dabei können beispielsweise in einem Fach Mopboxen und in dem anderen Fach Müllsäcke angeordnet werden. Bei Anordnung eines weiteren H-förmigen Elementes ergeben sich drei Fächer. Derartige Reinigungswagen sind durch ihre Größe als Wäschewagen für Hotels geeignet. Die Erweiterungen der Reinigungswagen können auch nachträglich vorgenommen werden.

Ein viertes Element kann U-förmig ausgebildet sein, wobei die Schenkel des vierten Elementes mit den Enden eines dritten Elementes verbindbar sind und die Enden des vierten Elementes können mit den Enden des ersten Elementes oder des zweiten Elementes verbindbar sein. Diese Elemente sind außerhalb der Fächer angeordnet und eignen sich aufgrund besonders leichter Erreichbarkeit insbesondere zur Aufnahme von Müllsäcken und Wischeimern.

Die Schenkel des vierten Elementes können durch zumindest eine Strebe verbunden sein. Die Streben bilden ein Gerüst zur Abstützung von Wischeimern, wobei die Streben derart angeordnet sein können, dass die Wischeimer mit ihrer Außenkontur oder mittels am Eimerboden angebrachter Formelemente beispielsweise Füßen oder umlaufenden Rippen, in die Streben einrasten und sicher gehalten sind.

Die Elemente können aus einem metallischen Werkstoff gebildet sein. Metallische Werkstoffe sind einfach zu verarbeiten und sind belastbar. Bei erhöhten Hygieneanforderungen können die Elemente aus rostfreiem Edelstahl bestehen.

Das Verbindungselement kann aus Kunststoff gebildet sein. Insbesondere im Spritzguss hergestellte Teile sind kostengünstig herstellbar. Kunststoff-Verbindungselemente lassen sich leichter in die Enden von metallisch ausgeführten Elementen einschieben.

An den Enden des ersten Elementes können Räder angeordnet sein. Als Räder werden vorzugsweise Lenkrollen eingesetzt, die über ein Verbindungselement an dem Radius des abgebogenen Querschnitts angeschweißt sind. Dadurch ist der Reinigungswagen bei hoher Kippstabilität leicht manövrierbar. Die Befestigung für das Rad kann auch als separates Teils, beispielsweise aus Kunststoff, ausgebildet sein, welches kraft- und/oder formschlüssig mit den geraden Profilabschnitten oder mit der unteren Biegung des ersten Elementes verbunden ist. Das Rad ist mit dem Verbindungselement verschraubt. Des Weiteren können Räder an Querstreben des zweiten und/oder vierten Elementes angeordnet sein. Durch die zusätzlichen Räder erhöht sich die Traglast des Reinigungswagens und die Kippstabilität verbessert sich nochmals.

Auf den Rahmen ist eine Schale aufsetzbar. In die Schale können verschiedene kleinteilige Reinigungsgeräte und Behälter mit Reinigungsmitteln leicht erreichbar abgestellt werden.

An der Querstrebe des ersten Elementes ist ein Müllsackhalter befestigbar. Der Müllsack ist leicht erreichbar.

### Kurzbeschreibung der Zeichnung

Einige Ausführungsbeispiele des erfindungsgemäßen Reinigungswagens werden nachfolgend anhand der Figuren näher erläutert. Diese zeigen, jeweils schematisch:
Fig. 1 einen Reinigungswagen;
Fig. 2 einen Reinigungswagen mit Blenden;
Fig. 3 eine Explosionsdarstellung des Rahmens;
Fig. 4 einen erweiterten Rahmen;
Fig. 5 einen nochmals erweiterten Rahmen;
Fig. 6 ein Zwischenstück.

### Ausführung der Erfindung

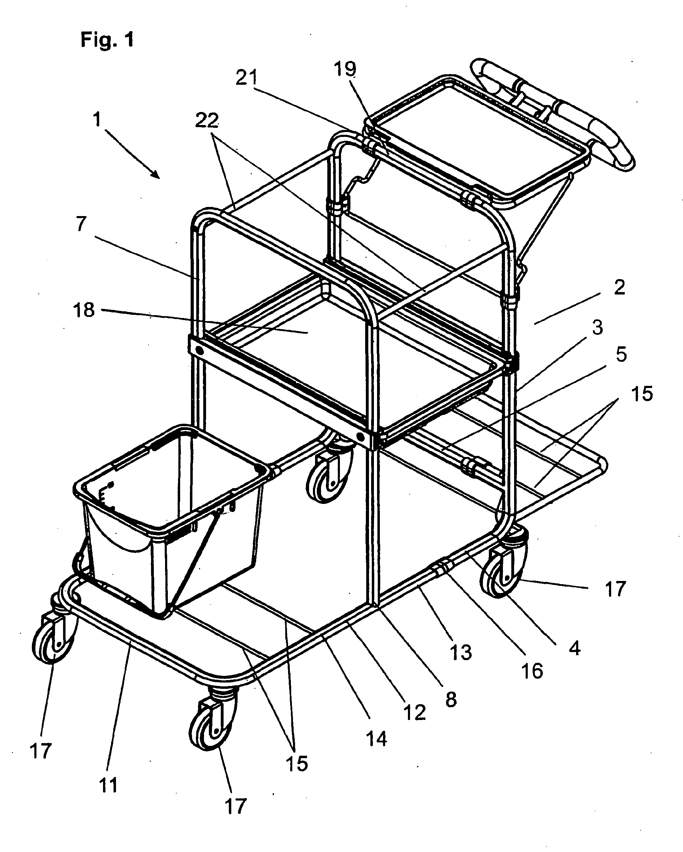

Figur 1 zeigt einen Reinigungswagen 1 mit einem erweiterbaren Rahmen 2. Der Rahmen 2 besteht aus kombinierbaren und lösbar miteinander verbindbaren Elementen. Dabei ist ein erstes Element 3 U-förmig ausgebildet und an seinen beiden Enden 4 rechtwinklig abgebogen. Die Enden 4 von Element 3 sind mit den Enden 13 eines vierten Elementes 11 verbunden, welches U-förmig ausgebildet ist. Dabei ist auf die Schenkel 12 des vierten Elementes 11 ein drittes Element 7 aufgesetzt. Dabei ist das dritte Element 7 ebenfalls U-förmig ausgebildet und die Enden 8 des dritten Elementes 7 sind auf die Schenkel 12 des vierten Elementes 11 aufgesetzt. Die Verbindung der Enden 4 und 13 erfolgt dabei über ein Verbindungselement 16 aus Kunststoff. Die miteinander verbundenen Elemente 3, 7 und 11 bilden den Rahmen 2. Zur Erhöhung der Stabilität sind die Enden 4 des ersten Elementes 3 und die Enden 8 des dritten Elementes 7 jeweils durch eine Verstärkungsstrebe 5 miteinander verbunden. Das erste Element 3 und das dritte Element 7 sind darüber hinaus jeweils durch eine weitere Verstärkungsstrebe 22 miteinander verbunden. Die Schenkel 14 des vierten Elementes 11 sind durch mehrere Streben 15 verbunden. Die Elemente 3, 11 bestehen aus einem flachovalen Profil und sind aus einem metallischen Werkstoff gebildet. An den Enden 4 des ersten Elementes 3 sind als Lenkrollen ausgebildete Räder 17 angeordnet. Auf den Rahmen 2 ist eine Schale 18 aufgesetzt, die sich auf den weiteren Verstärkungsstreben 22 abstützt. Die Schale 18 dient der Aufnahme mehrerer Wischeimer oder kleinteiliger Reinigungsgeräte. An der Querstrebe 19 des ersten Elementes 3 ist mittels eines Zwischenstücks 21 ein Müllsackhalter 20 befestigt. Ebenso kann zwischen der Querstrebe 19 des ersten Elementes 3 und der Querstreben 19 des zweiten Elementes 7 eine Müllsackhalterung 20 angebracht werden.

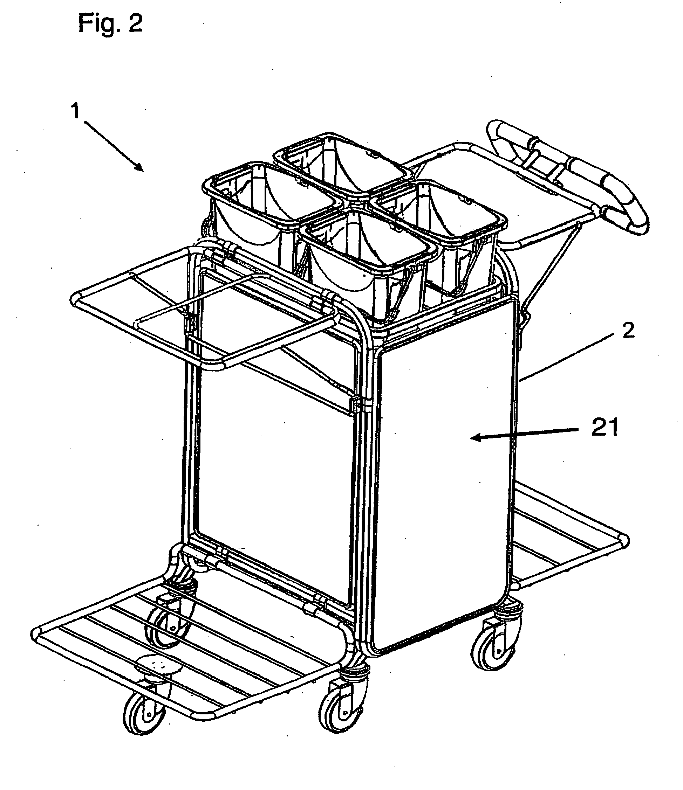

Figur 2 zeigt einen Reinigungswagen 1 gemäß Figur 1, wobei in dem Rahmen 2 auf jeder Seite Blenden 21 angeordnet sind. Dabei ist mindestens eine Blende 21 als klappbare Tür ausgebildet. Die Blenden 21 sind über Kunststoffverbindungsstücke lösbar an dem Rahmen 2 befestigt und können nachträglich eingehängt oder entfernt werden.

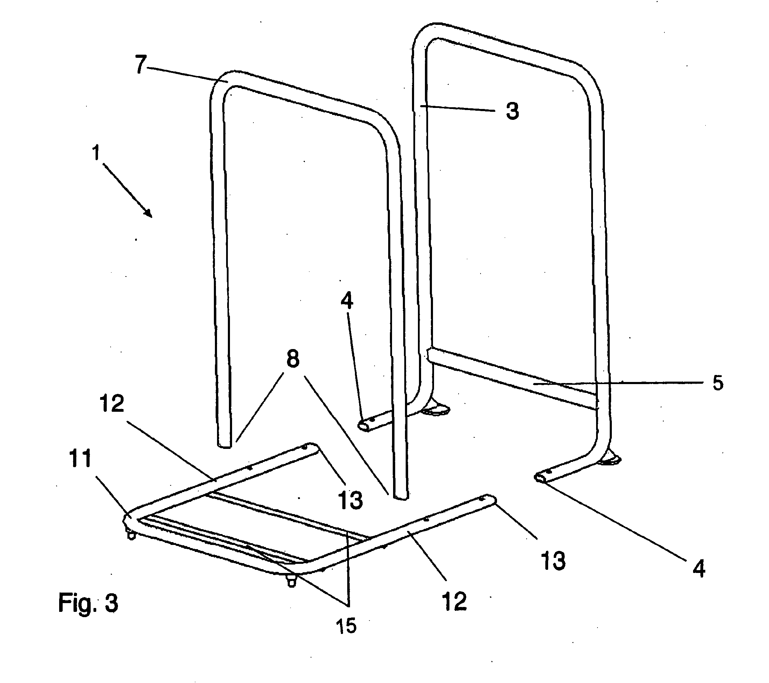

Figur 3 zeigt eine Explosionsdarstellung des Reinigungswagens 1 gemäß Figur 1.

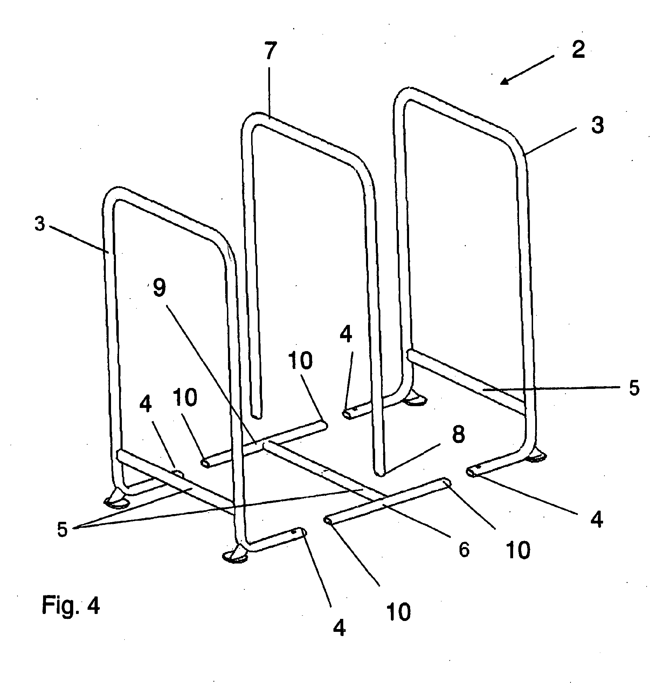

Figur 4 zeigt einen Rahmen 2, der gegenüber den Rahmen 2 aus den Figuren 1 bis 3 erweitert ist. Dazu ist ein zweites H-förmig ausgebildetes zweites Element 6 und ein drittes U-förmiges Elemente 7 vorgesehen. Die Enden 8 des dritten Elementes 7 sind durch ein lösbar angebrachtes T-förmiges Verbindungselement 16 aus Kunststoff mit dem zweiten Element 6 an dessen Knotenstellen 9 verbunden. Die Enden 10 des zweiten Elementes 6 sind mit den Enden 4 der beiden ersten Elemente 3 verbunden.

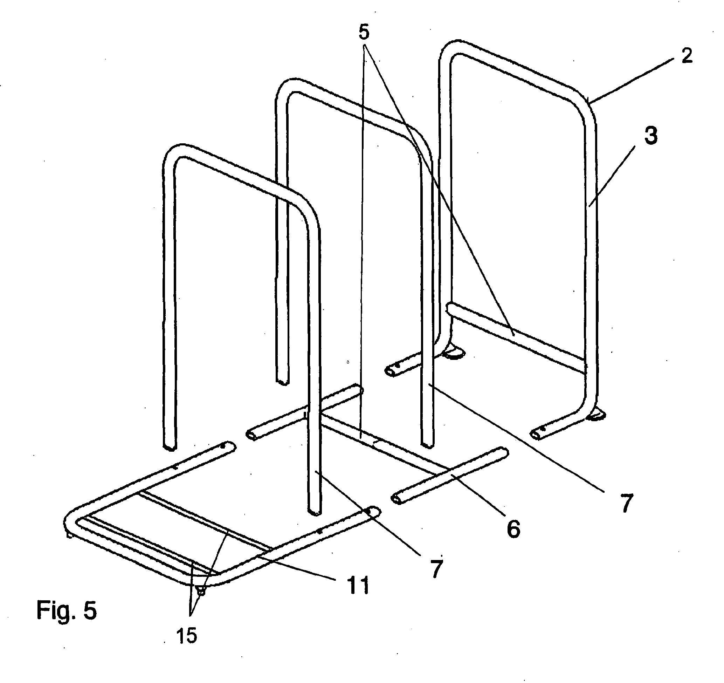

Figur 5 zeigt einen Rahmen 2 gemäß Figur 4, wobei zwischen dem ersten Element 3 und dem vierten Element 11 ein zweites und zwei dritte Elemente 6, 7 angeordnet sind.

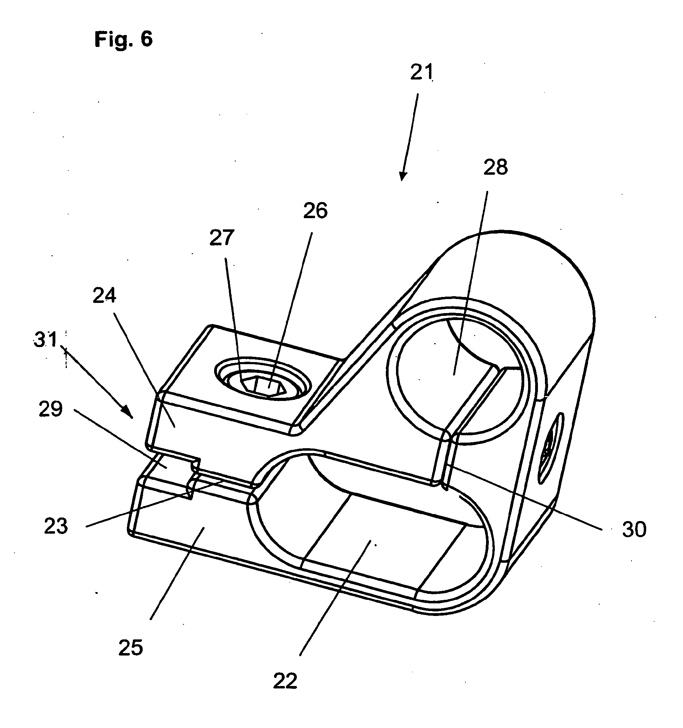

Figur 6 zeigt ein Zwischenstück 21 mittels welchem verschiedene Anbauteile, beispielsweise ein Müllsackhalter 20 an dem Reinigungswagen 1 befestigt werden kann. Das Zwischenstück ist als Kunststoff-Spritzgussteil ausgebildet und weist eine erste Durchbrechung 22 auf. Die erste Durchbrechung 22 ist kongruent zu dem Profil des Reinigungswagens 1 ausgebildet, in dieser Ausführung ist die erste Durchbrechung 22 flachoval ausgebildet. Die erste Durchbrechung 22 ist durch einen Schlitz 23 zu einer Seite geöffnet. Der Schlitz 23 trennt zwei Zungen 24, 25, die aufgrund des Schlitzes 23 leicht voneinander beabstandet sind. Der Schlitz 23 weist eine Ausnehmung 29 auf, die als Aufnahme für eine Blende 31 ausgebildet ist. Die Blende 31 wird dabei formschlüssig und leicht lösbar gehalten. In den beiden Zungen 24, 25 ist jeweils eine Bohrung 26 angeordnet, die der Aufnahme eines Befestigungselementes, beispielsweise einer Schraube dient. Die Bohrung in der Zunge 24 weist darüber hinaus eine sechseckige Ausnehmung 27 zur Aufnahme einer Sechskantmutter auf. Durch den Schlitz 23 kann das Zwischenstück 21 auch nachträglich an einem Profil befestigt werden, da das Zwischenstück 21 aufgebogen werden und auf ein Profil aufgeklipst werden kann. Durch ein Befestigungselement, welches in die Bohrung 26 eingeführt wird, kann das Zwischenstück 21 auf einem Profil verklemmt werden. Die Klemmwirkung ist aufgrund des Abstandes der beiden Zungen 24, 25 dosierbar. Des Weiteren kann die Blende 31 in der Ausnehmung 29 zusätzlich verklemmt werden. Benachbart zu der ersten Durchbrechung 22 ist eine zweite Durchbrechung 28 angeordnet. Die zweite Durchbrechung 28 dient der Aufnahme von Anbauteilen. Die zweite Durchbrechung 28 ist durch einen weiteren Schlitz 30 mit der ersten Durchbrechung 22 verbunden. Durch den weiteren Schlitz 30 erhöht sich die Beweglichkeit des Zwischenstücks 21 und das Zwischenstück 21 ist leichter auf ein Profil zu montieren.

## Patentansprüche

1. Reinigungswagen (1) mit einem erweiterbaren Rahmen (2) aus kombinierbaren und lösbar verbindbaren Elementen, wobei ein erstes Element (3) U-förmig ausgebildet und an seinen beiden Enden (4) rechtwinklig abgebogen ist, so dass die Enden (4) von der U-förmig ausgebildeten Fläche abstehen, **dadurch gekennzeichnet,**
**dass** die Elemente ein unrundes Profil aufweisen,
**dass** die Elemente durch ein Verbindungselement miteinander verbunden sind, und
**dass** das Verbindungselement als Steckteil zum Bilden einer formschlüssigen Verbindung ausgebildet ist.

2. Reinigungswagen nach Anspruch 1, **dadurch gekennzeichnet, dass** die Elemente ein ovales Profil aufweisen.

3. Reinigungswagen nach Anspruch 1 oder 2, **dadurch gekennzeichnet, dass** zwei erste Elemente (3) an deren Enden (4) verbunden den Rahmen (2) bilden.

4. Reinigungswagen nach einem der Ansprüche 1 bis 3, **dadurch gekennzeichnet, dass** die Enden (4) des ersten Elementes (3) durch eine Verstärkungsstrebe (5) miteinander verbunden sind.

5. Reinigungswagen nach einem der Ansprüche 1 bis 4, **dadurch gekennzeichnet, dass** ein zweites Element (6) H-förmig ausgebildet und ein drittes Element (7) U-förmig ausgebildet ist, wobei die Enden (8) des dritten Elementes (7) mit dem zweiten Element (6) an dessen Knotenstellen (9) verbunden ist und dass die Enden (10) des zweiten Elementes (6) mit den Enden (4) des ersten Elementes (3) verbindbar sind.

6. Reinigungswagen nach einem der Ansprüche 1 bis 5, **dadurch gekennzeichnet, dass** ein viertes Element (11) U-förmig ausgebildet ist, wobei die Schenkel (12) des vierten Elementes (11) mit den Enden (8) eines dritten Elementes (7) verbindbar sind und die Enden (13) des vierten Elementes (11) mit den Enden (4, 10) des ersten Elementes (3) oder des zweiten Elementes (6) verbindbar sind.

## Claims

1. Cleaning trolley (1) having an extendible frame (2) made of combinable and releasably connectable elements, wherein a first element (3) is of U-shaped design and has its two ends (4) bent at right angles, in which case the ends (4) project from the U-shaped surface, **characterized**
**in that** the elements have a non-round profile,
**in that** the elements are connected to one another by a connecting element, and
**in that** the connecting element is designed in the form of a plug-in part for forming a form-fitting connection.

2. Cleaning trolley according to Claim 1, **characterized in that** the elements have an oval profile.

3. Cleaning trolley according to Claim 1 or 2, **characterized in that** two first elements (3), connected at their ends (4), form the frame (2).

4. Cleaning trolley according to one of Claims 1 to 3, **characterized in that** the ends (4) of the first element (3) are connected to one another by a reinforcing strut (5).

5. Cleaning trolley according to one of Claims 1 to 4, **characterized in that** a second element (6) is of H-shaped design and a third element (7) is of U-shaped design, wherein the ends (8) of the third element (7) are connected to the second element (6) at the junction points (9) thereof, and **in that** the ends (10) of the second element (6) can be connected to the ends (4) of the first element (3).

6. Cleaning trolley according to one of Claims 1 to 5, -**characterized in that** a fourth element (11) is of U-shaped design, wherein the limbs (12) of the fourth element (11) can be connected to the ends (8) of a third element (7) and the ends (13) of the fourth element (11) can be connected to the ends (4, 10) of the first element (3) or of the second element (6).

## Revendications

1. Chariot de nettoyage (1) comprenant un cadre extensible (2) constitué d'éléments pouvant être combinés et pouvant être reliés de manière amovible, un premier élément (3) étant réalisé en forme de U et étant plié à angles droits à ses deux extrémités (4), de telle sorte que les extrémités (4) fassent saillie à partir de la surface réalisée en forme de U, **caractérisé en ce que** les éléments présentent un profil non rond,
**en ce que** les éléments sont reliés les uns aux autres par un élément de liaison, et
**en ce que** l'élément de liaison est réalisé sous forme de pièce enfichable pour former une liaison par engagement par complémentarité de formes.

2. Chariot de nettoyage selon la revendication 1, **caractérisé en ce que** les éléments présentent un profil ovale.

3. Chariot de nettoyage selon la revendication 1 ou 2, **caractérisé en ce que** deux premiers éléments (3), connectés à leurs extrémités (4), forment le cadre (2).

4. Chariot de nettoyage selon l'une quelconque des revendications 1 à 3, **caractérisé en ce que** les extrémités (4) du premier élément (3) sont reliées l'une à l'autre par une entretoise de renfort (5).

5. Chariot de nettoyage selon l'une quelconque des revendications 1 à 4, **caractérisé en ce qu'**un deuxième élément (6) est réalisé en forme de H et un troisième élément (7) est réalisé en forme de U, les extrémités (8) du troisième élément (7) étant reliées au deuxième élément (6) au niveau de ses points de jonction (9), et en ce' que les extrémités (10) du deuxième élément (6) peuvent être reliées aux extrémités (4) du premier élément (3).

6. Chariot de nettoyage selon l'une quelconque des revendications 1 à 5; **caractérisé en ce qu'**un quatrième élément (11) est réalisé en forme de U, les branches (12) du quatrième élément (11) pouvant être reliées aux extrémités (8) d'un troisième élément (7) et les extrémités (13) du quatrième élément (11) pouvant être reliées aux extrémités (4, 10) du premier élément (3) ou du deuxième élément (6).
